# EUROPÄISCHE PATENTSCHRIFT

(11) **EP 0 794 009 B1**
(45) Veröffentlichungstag und Bekanntmachung des Hinweises auf die Patenterteilung: **03.07.2002**
(21) Anmeldenummer: 97103481.4
(22) Anmeldetag: 04.03.1997
(51) Int. Cl.: B05B 7/14, B65G 53/66, B05B 7/20, B05B 12/08

(54) **Verfahren zur Regelung des dosierten Zuführens von Pulver zu einer Pulververarbeitungseinheit und Vorrichtung zur Durchführung des Verfahrens**
Method for adjusting the metred supply of powder to a powder processing unit and device for carrying out the method
Procédé de réglage du dosage de l'alimentation en poudre d'une unité de traitement de poudre et dispositif permettant la mise en oeuvre de ce procédé

(30) Priorität: 05.03.1996 DE 19608432
(43) Veröffentlichungstag der Anmeldung: 10.09.1997
(73) Patentinhaber: Medicoat AG, 5506 Mägenwil (CH)
(72) Erfinder: Gruner, Heiko, Dr., 5712 Beinwil am See (CH)
(74) Vertreter: Patentanwälte Eisele, Otten, Roth & Dobler

(56) Entgegenhaltungen:
- EP-A- 0 490 174
- FR-A- 2 066 355
- US-A- 4 059 310

## Beschreibung

Die Erfindung bezieht sich auf ein Verfahren zur Regelung des dosierten Zuführens von Pulver zu einer Pulververarbeitungseinheit nach dem Oberbegriff des Patentanspruchs 1 sowie auf eine Vorrichtung zur Durchführung des Verfahrens.

Aus der US-A-4 059 310 ist eine Vorrichtung zur Regelung des dosierten Zuführens von Pulver zu einer Pulververarbeitungseinheit bekannt geworden, bei welcher das Pulver über eine als Zellenradschleuse ausgebildete Dosiereinrichtung in eine Förderleitung mit einem Fördergasstrom zugeführt wird. Um ein möglichst konstantes Verhältnis zwischen Trägergas zur Pulvermenge einzuhalten, wird die Zufuhr der Pulvermenge in die Förderleitung in Abhängigkeit des Gasdruckes durchgeführt. Ein konstanter Trägergasdruck wird hierdurch nicht erzielt, was für das nachfolgende Arbeitsergebnis negativ sein kann.

Aus der FR-A-20 66 355 ist weiterhin eine Vorrichtung zur Regelung des dosierten Zuführens von Pulver zu einer Pulververarbeitungseinheit bekannt geworden, bei welcher das Pulver mittels einer Transportplatte zur Pulverabführeinheit transportiert wird. Eine Druckregelung des Transportgases ist hier nicht vorgesehen.

Bei einer als nächstliegender Stand der Technik bekannten Vorrichtung (DE 28 07 866 C2), ist in die Dosierplatte eine kreisförmig verlaufende Pulverrille eingearbeitet. Am Auslaß des Pulverbehälters zur Pulverrille der Dosierplatte ist ein Abstreifer angebracht, um das saubere Ablegen des Pulvers in der Pulverrille zu gewährleisten. Über der Pulverrille der Dosierplatte befindet sich ein Absauger. Das in die Pulverfördereinheit hineinströmende Trägergas baut einen bestimmten Gasdruck auf, welcher im Bereich des in die Pulverrille hineinragenden Absaugers für das kontinuierliche Abströmen des Trägergases in die Leitung zum Pulververbraucher verantwortlich ist. Gleichzeitig wird vom Trägergas das vom Dosierteller an die Öffnung des Absaugers herangeführte Pulver kontinuierlich mitgenommen. Dennoch bildet sich nur unter bestimmten Bedingungen ein pulsationsfreier Materialfluß aus, bestehend aus den Pulverpartikeln im Trägergas. Beispielsweise können ungleichmäßige Pulverportionen in die Pulverrille abgelegt werden, oder es können die in die Pulverrille abgelegten Pulverpartikel untereinander so verbunden sein, daß an der Absaugöffnung kleine Verstopfungen auftreten. Der dann rasch ansteigende Trägergasdruck entspannt sich dann stoßweise in die Pulvertransportleitung unter diskontinuierlichem Mitreißen von einzelnen Pulverportionen. Als besonders nachteilig erweist sich darüber hinaus auch der ständige Verschleiß der Abstreifer und Absauger durch Pulverpartikel, welche vom Dosierteller unter ihre Auflageflächen geschoben werden.

Für eine Vielzahl von Pulververarbeitungseinheiten mögen Pulsationen in der Pulverzufuhr tolerierbar sein, ohne daß die Qualität des aus dem kontinuierlichen Pulverzuflusses entstehenden Produktes beeinträchtigt wird. Für Spritzschichten, welche aus Spritzpulver unter Einsatz eines der bekannten Verfahren des thermischen Spritzens entstehen, ist die kontinuierliche, pulsationsfreie und während der gesamten Spritzzeit konstante Pulverzufuhr qualitätsentscheidend.

Bei allen Verfahren des thermischen Spritzens sind deshalb zusätzliche Bedingungen an den Trägergasfluß und die darin transportierten Pulverpartikel zu stellen, um eine optimale Spritzschicht zu erreichen:

Möglichst alle Pulverpartikel müssen in die thermische Spritzflamme so eingebracht werden, daß sie innerhalb der Flamme auf ihrem Weg zum Substrat aufgeschmolzen werden und als Flüssigtröpfchen auf der Oberfläche auftreffen. Beim Transport im Trägergas zur thermischen Flamme muß jedem Pulverpartikel möglichst unabhängig von Größe, Form und Gewicht genau der Impuls übertragen werden, welcher zum Eindringen in die Flamme ausreichend ist. Zu wenig kinetische Energie läßt die Pulverkörner nur am Rande der thermischen Flamme mitfliegen, zu viel kinetische Energie beim Eindringen treibt die Pulverpartikel durch die thermische Flamme hindurch (siehe Fig. 4). Eine wichtige Kenngröße für die optimale Injektion ist auch die Trägergasmenge, welche einerseits zum Transport des Pulvers benötigt wird, andererseits für das optimale Injektieren sorgt. Es besteht die Aufgabe, die Trägergasmenge immer so klein wie möglich zu halten, weil sie als kaltes Gas die Aufschmelzwirkung der thermischen Flamme beeinträchtigt.

Der Erfindung liegt damit die Aufgabe zugrunde, ein Verfahren sowie eine Vorrichtung der eingangs beschriebenen Art zu schaffen, welche ein genau einstellbares Dosieren für Pulver unterschiedlicher Körnung ermöglicht und gleichzeitig dafür sorgt, daß der Pulverzufluß zur Pulververarbeitungseinheit gleichmäßig erfolgt, unter stetigem, pulsationsfreiem Materialfluß. Die Erfindung soll weiter insbesondere garantieren, daß die Injektion des Pulvers in optimierter Abstimmung auf die übrigen Prozeßparameter der thermischen Flamme unter minimalisiertem Trägergasverbrauch sichergestellt ist und daß ein automatischer Regelprozeß Abweichungen von den idealen Pulvertransport- und/oder Pulverinjektionsbedingungen erkennen kann und Maßnahmen zur Rückführung in den Idealzustand auszuführen in der Lage ist.

Es ist bekannt, daß z. B. durch das stufenlose Steuern eines Antriebsmotors für die Dosierplatte eine volumentrische Regelung der Pulverablage möglich ist, vorausgesetzt die Dosierung aus dem Pulverbehälter verläuft störungsfrei. Auch ist weiter bekannt, daß sich die gesamte Vorrichtung zur Pulverförderung auf einer elektronischen Waage befindet, um so die rein volumentrische Dosierung (cm³/min) des Pulverflusses in eine gewichtsabhängige umzuwandeln. Der elektronisch steuerbare Antriebsmotor beispielsweise einer Pulverförderschnecke wird dann so eingestellt, daß die Pulverförderung mit konstantem Massenfluß (g/min) erfolgt. Die bekannten Pulverdosierverfahren haben aber alle den Nachteil, daß sie Störungen im Pulvertransport zum Pulververbraucher nicht erkennen können. Oder wenn sie sie schon registrieren können, beispielsweise bei der elektronischen Wiegung der kompletten Fördereinheit, daß die Störungen nicht kompensiert werden können. Speziell bei thermischen Flammen als Pulververarbeitungseinheit kommt erschwerend noch die Erfassung und Regelung der durch den gestörten Pulverfluß verursachten Abweichungen von der ideal eingestellten Injektion in die thermische Flamme hinzu, wodurch die Schichtqualität leidet.

Wichtige Aufgabe der Erfindung ist deshalb, den kontinuierlichen Transport der genau dosierten Pulvermenge in einem minimalisierten, ebenfalls konstant geregelten Trägergasfluß sicherzustellen, unter Konstant-Regelung der einmal gewählten Injektionsparameter für das Pulver in die thermische Flamme.

Die Aufgabe der Erfindungen wird erfindungsgemäß durch die Merkmale der Ansprüche 1 und 7 gelöst. Wesentlich für die Erfindung ist es, daß der Gasdruck im Pulverförderbehälter, welcher sich aus der in den Behälter einströmenden Gasmenge und der für den Pulvertransport zum Pulververbraucher abströmenden Gasmenge aufbaut, unter Bezug zu dem am Pulverinjektionspunkt der thermischen Flamme herrschenden Gegendruck gemessen wird und als Regelgröße für den volumenkonstanten Pulverzufluß benützt wird, zur Sicherstellung konstanter Injektionsparameter für das mit Hilfe des Trägergases transportierte Pulver. Durch Steuerung des stufenlos regelbaren Antriebsmotors der Dosierplatte in Abhängigkeit vom Gasdruck des Pulverförderbehälters wird nicht nur die Pulverfördermenge konstant geregelt, sondern auch die Injektion in die thermische Flamme. Störungen beim Dosieren des Pulvers auf die Dosierplatte werden so kompensiert, ein impulsfreier Pulvertransport zum Pulververbraucher ist sichergestellt, so daß eine Pulverinjektion in die thermische Flamme unter konstantem Trägergasdruck an der Injektionsstelle erfolgt.

Zweckmäßig besitzt die rotierende Dosierplatte keine kreisförmig verlaufende Pulverrille. Die rotierende Dosierplatte ist vorteilhafterweise fest gelagert. Die Ablagehilfe des Pulvers auf die Dosierplatte und die Entnahmehilfe des Pulvers von der Dosierplatte sind vorteilhaft aus einem Stück gefertigt und liegen planparallel auf der Dosierplatte auf.

Um das Pulver von der Dosierplatte in das Trägergas einzubringen, mit dessen Hilfe der Transport zum Pulververbraucher erfolgt, wird es vorteilhaft seitlich über den Rand der Dosierplatte abgestreift, von wo es direkt in den zweckmäßig trichterförmigen Trägergasauslaß fällt und vom Gasstrom mitgenommen wird. Damit wird gleichzeitig die für die optimale Pulverinjektion in die thermische Flamme benötigte Trägergasmenge minimalisiert.

Besonders zweckmäßig wird der Gaseinlaß in den Pulverförderer so ausgelegt, daß das Gas über eine oder mehrere in der Abstreiferplatte eingebrachte Aussparungen zwischen der Dosierplatte und der planparallel aufgelegten Abstreiferplatte strömen kann, um so Pulverpartikel, welche trotz sorgfältiger Auflage der Abstreiferplatte immer wieder zwischen den Dosier- und Abstreifer rutschen, zu entfernen und so den Verschleiß der Abstreiferplatte praktisch zu eliminieren.

Ausführungsbeispiele sind in den Zeichnungen dargestellt und werden im folgenden näher beschrieben. In den Zeichnungen zeigen
- Fig. 1a, 1b: eine schematische Darstellung einer Pulverzufuhr mit Dosiervorrichtung im Querschnitt sowie in Draufsicht.
- Fig. 2: zeigt schematisch den Gasfluß von der Quelle über die Pulverfördereinheit zur Pulververbrauchereinheit, welche eine thermische Flamme darstellt. Mit p₁ bis p₄ sind die charakteristischen Gasdrücke bezeichnet, wobei mit p₃ der Gasdruck in der Fördereinheit bezeichnet ist, welcher als Regelgröße für die volumenkonstante Pulverinjektion in die thermische Flamme elektronisch erfaßt wird.
- Fig. 3a: zeigt schematisch einen Querschnitt einer Pulverabnahmestation vom Dosierteller um zu erläutern, wie die Regelgröße p₃ durch unterschiedliche Pulvermengen auf dem Dosierteller beeinflußt wird, welche sich mit konstanter Bewegung zur Abnahmestation hin bewegen,
- Fig. 3b: ein zugehöriges Druck/Zeit-Diagramm;
- Fig. 4: zeigt die Brenneranordnung mit der Pulvertransportleistung 13.

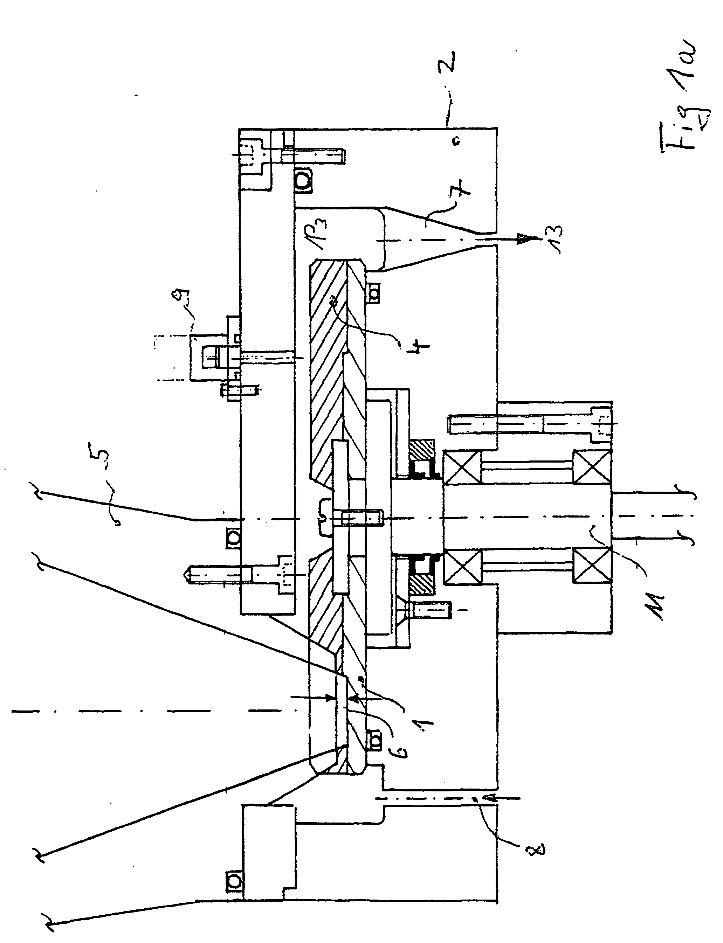

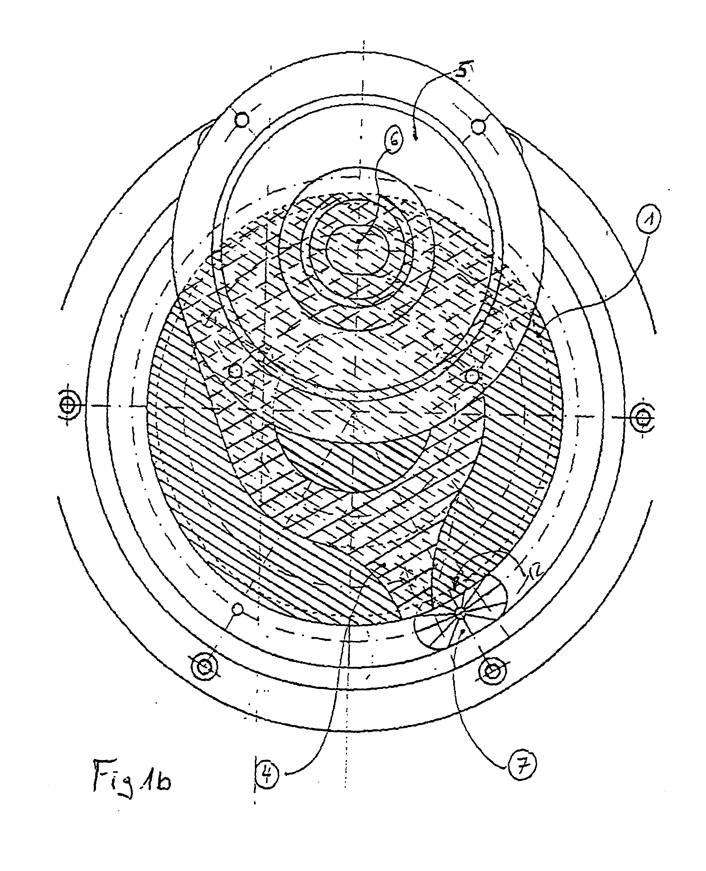

Fig. 1 zeigt eine Vorrichtung zum dosierten Zuführen von Pulver zu einer Pulververarbeitungseinheit. Eine rotierende Dosierplatte 1 ist in einem stationären Gehäuse 2 gas- und vakuumdicht gelagert und über eine mechanische Kupplung von einer nicht gezeigten, stufenlos regelbaren Motor/Getriebekombination bewegt. Planparallel auf der Dosierplatte, von oben z.B. mittels Federn angepraßt, liegt die Abstreiferplatte (4), welche das aus dem konusförmigen Pulverbehälter (5) kontinuierlich abfließende Pulver mengenmäßig begrenzt. Die tatsächlich dosierte Menge hängt von der Spalthöhe (6) der Abstreiferplatte und von der Rotationsgeschwindigkeit des Dosiertellers ab. Um bevorzugt ca. 180° gegenüber dem Spalt 6 versetzt, ist die Abstreiferplatte so gestaltet, daß die von der Dosierplatte herangebrachte Pulvermenge kontinuierlich seitlich direkt in die Abführleitung 7 des Trägergases fällt. Das Trägergas wird über die Einlaßöffnung 8 in den Förderraum eingelassen. Der Massenfluß des Trägergases ist konstant geregelt, und wird vom Druckgeber 9 elektronisch erfaßt, wobei das Signal als Regelgröße für die Rotationsgeschwindigkeit der Dosierplatte benützt wird.

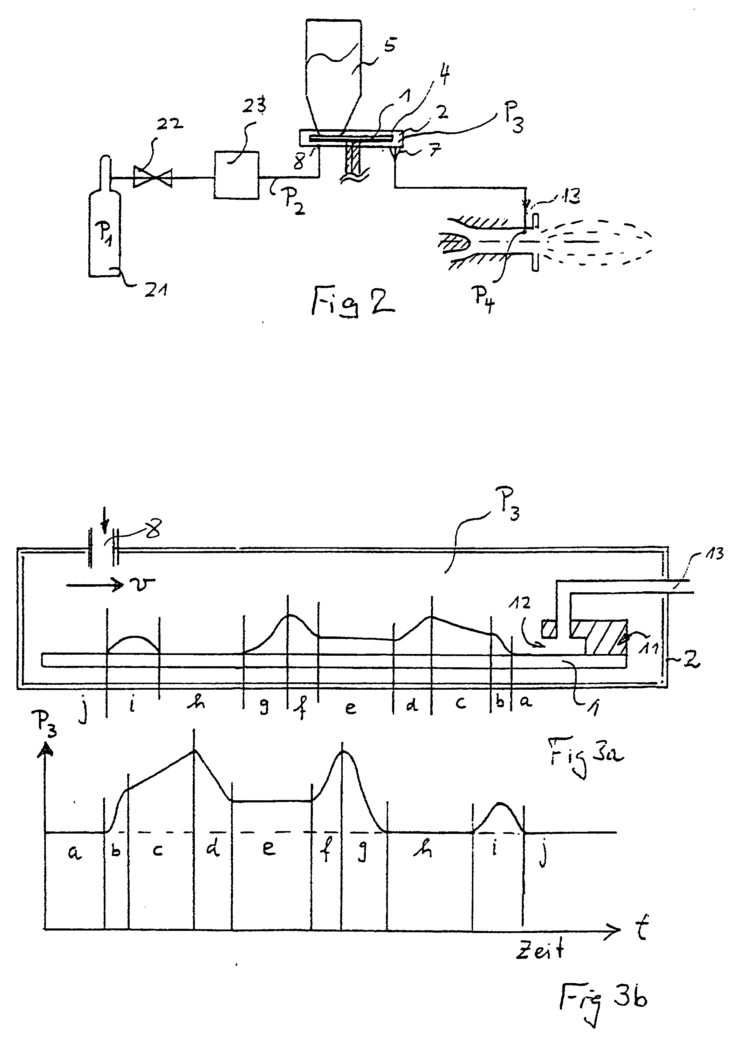

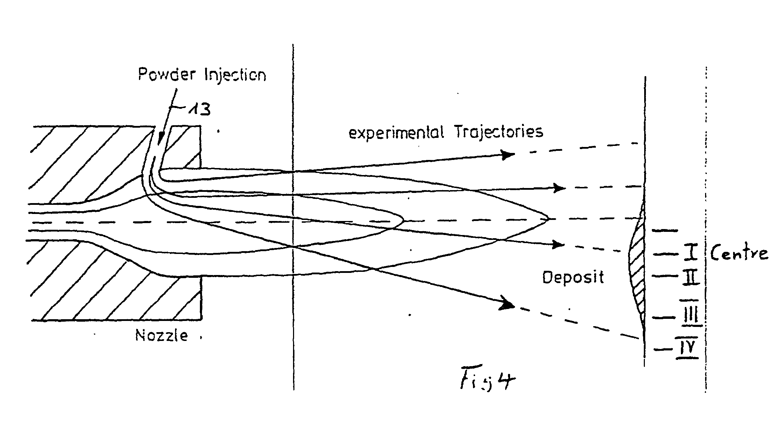

Fig. 2 zeigt den Gasfluß von der Quelle zum Verbraucher und erläutert den Aufbau des Regelkreises für die volumenkonstante Pulverförderung bei gleichzeitig druckkonstanter Pulverinjektion in die thermische Flamme. Mit 2 ist die Gasquelle bezeichnet, meist eine Druckflasche mit dem Gasdruck p₁. Dieser wird mit Hilfe eines Druckregelventils (22) auf den Leitungsdruck p₂ eingestellt. Dabei sorgt die Regeleinheit (23) für einen massenkonstanten Fluß des Gases zur Pulverfördereinheit, bestehend aus dem stationären Gehäuse 2, dem Pulverbehälter 5, der rotierenden Dosierplatte 1 mit der planparallelen Abstreiferplatte 4. Das massenkonstante Trägergas strömt über die Öffnung 7 wieder in Richtung Pulververbraucher ab, wobei jetzt im Trägergas das dosierte Pulver mittransportiert wird. Für den Trägergasdruck p₃, welcher sich in der Pulvereinheit aufbaut, sind verschiedene Einflußgrößen verantwortlich, zum Beispiel der Druck p₄ der thermischen Flamme an der Stelle, wo das mit dem Trägergas transportierte Pulver injektiert wird (siehe Fig. 4). Diese Einflußgrößen werden unter dem Begriff Injektionsparameter zusammengefaßt. Auf sie muß nicht im Detail eingegangen werden, da sie apparative Konstanten sind, welche man bei der Suche nach der optimalen Injektion des Pulvers in die thermische Flamme berücksichtigen muß. Der Druck p₃ wird entscheidend von der Pulvermenge bestimmt, welche mit konstantem Trägergasmassenstrom über die Abführleitung zu Pulververarbeitungseinheit transportiert wird. Das erläutert Fig. 3, welche in Fig. 3a schematisch das Beispiel für eine Pulverentnahmestation zeigt. Mit Hilfe einer rotierenden Dosierplatte 1, welche sich z.B. mit konstanter Geschwindigkeit bewegt, werden unterschiedlich große Pulverportionen zur Entnahmestelle 11 transportiert. Wenn kein Pulver am Eintrittsspalt 12 ankommt, hat p₃ einen durch die Injektionsparameter vorgegebenen Wert. Sobald aber Pulver den Eintrittsspalt 12 erreicht, steigt p₃ genau auf den Druckwert an, welcher notwendig ist, um die ankommende Pulvermenge/Zeiteinheit in konstant geregeltem Trägergasfluß abzutransportieren (siehe Fig. 3b). Mit steigender Pulvermenge steigt p₃ weiter an, wobei kontinuierlich das Pulver vom Trägergas mitgenommen wird. Allerdings gibt es für jeden eingestellten Träger einen oberen Grenzwert für die störungsfreie abtransportierbare Pulvermenge. Wird diese Grenze erreicht, so staut sich das Pulver am Eintrittsspalt 12, es kommt folglich zu Drucküberhöhungen, welche sich impulsartig über die Pulvertransportleitung 13 zur Injektionsstelle hin entspannen, unter Mitreißen größerer Pulverportionen. Umgekehrt nimmt mit abnehmender Pulvermenge vom Eintrittsspalt 12 auch der Druck p₃ in der Fördereinheit ab, bis zum unteren Grenzwert, wenn kein Pulver vorhanden ist. Der Verlauf von p₃ in Abhängigkeit von der transportierten Pulvermenge ist als Funktion der Zeit t in Fig. 3b aufgezeichnet, mit der die Dosierplatte 1, die einzelnen Portionen unter Einhaltung der konstanten Rotationsgeschwindigkeit v zum Eintrittsspalt transportiert.

Kern der Erfindung ist es nun, den Trägergasdruck p₃ als Regelgröße für den Transport einer konstanten Pulvermenge in einem massenflußkonstanten Trägergas zu einer thermischen Flamme zu benützen, unter Aufrechterhaltung eines konstanten Druckes p₄ an der Pulverinjektionsstelle der thermischen Flamme.

Das wird durch die elektronische Koppelung der Rotationsgeschwindigkeit des Dosiertellers 1 mit dem Druck p₃ erreicht. Die Geschwindigkeit des Tellers muß so eingestellt werden, daß p₃ konstant bleibt, unabhängig von der an der Tellerentnahmestelle ankommenden Pulvermenge. So können Schwankungen im Schüttgewicht der volumenkonstanten Pulvermenge ausgeglichen, Pulverberge auf dem Dosierteller abgebaut, ungleichmäßige Förderhöhen kompensiert und Förderlücken in der Pulverdosierung durch Schnellvorschub des Dosiertellers eliminiert werden, um gleichzeitig die für die Spritzschichtqualität so entscheidende Pulverinjektion konstant zu halten.

In der Fig. 4 der Erfindung ist unter anderem die Erfindungsproblematik mit Lösungsansätzen dargestellt, wobei die Schichtproduktion unter kontinuierlicher, volumenkonstanter Pulverzuführung im massenflußkonstantem Trägergas erfolgt. Die apparativen Injektionsparameter sind schichtbezogen optimiert und festgelegt.

Der in Fig. 2 prinzipiell dargestellte Lösungsansatz der gestellten Aufgabe beinhaltet eine konstante Pulverinjektionsmenge durch Regelung der Pulverdosierung in Abhängigkeit vom Trägergasdruck im Pulverförderer.

Die in Fig. 1a im Querschnitt sowie in Fig. 1b in Draufsicht dargestellte praktische Ausführungsform der Vorrichtung beinhaltet insbesondere die dargestellte Steuerung der Rotationsgeschwindigkeit des Pulverdosiertellers 1 unter Konstanthaltung des Trägergasdruckes p₃ im Pulverförderer bei konstant geregeltem Massenfluß des Trägergases. Hierdurch wird eine Minimalisierung der Trägergasmenge durch seitliche Abwerfen in den Trägergasstrom erreicht, wobei die in Fig. 1b in Draufsicht dargestellte bogenförmige Abstreifkante am Abstreifer 4 vorgesehen ist, die das Pulver in den Eintrittsspalt 12 führt. Weiterhin ist eine Erhöhung der Lebensdauer der Abstreifplatte durch eine Zwangsführung des Trägergases zur Reinigung der Dosierplatte vorgesehen.

Die in der Fig. 3a dargestellten örtlichen Pulververläufe bzw. Anhäufungen auf der Dosierplatte 1 zeigen das Erfordernis einer geregelten Vorrichtung dahingehend auf, daß eine vollständige Kompensation von Störungen in der Dosierung erzielt wird durch einen kontinuierlichen Abbau von Bergen sowie einem Ausgleich von Förderlücken und einer Egalisierung von Schüttgut-Schwankungen. Dies geschieht durch eine Geschwindigkeitsregelung der Transportplatte 1 dahingehend, daß der Trägergasdruck p₃ in der Pulverfördereinheit annähernd konstant bleibt.

Die Erfindung ist nicht auf das beschriebene und dargestellte Ausführungsbeispiel beschränkt. Sie umfaßt auch vielmehr alle fachmännischen Weiterbildungen im Rahmen der Schutzrechtsansprüche.

## Patentansprüche

1. Verfahren zur Regelung des dosierten Zuführens von Pulver zu einer Pulververarbeitungseinheit, insbesondere eine thermische Spritzflamme, mit einem Pulvervorratsbehälter (5) und einer Dosierstation für eine dosierte Ablage des Pulvers auf eine rotierende Pulver-Dosierplatte (1) in einem Gehäuse (2) einer Pulverfördereinheit wobei eine kontinuierliche Übergabe des Pulvers zu einer Pulverabführeinheit (7, 12) mit Hilfe eines Trägergases erfolgt, **dadurch gekennzeichnet, daß** eine auf der Dosierplatte (1) variabel anfallende Pulvermenge mittels eines Trägergases innerhalb des Gehäuses(2) gefördert und der Gasdruck (p3) innerhalb des Gehäuses (2) als Regelgröße erfaßt wird und daß die Geschwindigkeit (v) der Dosierplatte (1) mit der das dosierte Pulver mittels der Dosierplatte (1) zur Pulverabführeinheit (7, 12) transportiert wird derart geregelt ist, daß der Trägergasdruck (p₃) in der Pulverfördereinheit (2) annähernd konstant ist.

2. Verfahren nach Anspruch 1, **dadurch gekennzeichnet, daß** der Gasdruck (p₃) im Pulverförderbehälter (2), welcher sich aus der in den Behälter (2) einströmenden Gasmenge und der für den Pulvertransport zum Pulververbraucher abströmenden Gasmenge aufbaut, unter Bezug zu dem am Pulverinjektionspunkt in der thermischen Flamme herrschenden Gegendruck (p₄) gemessen und als Regelgröße für den Volumenkonstanten Pulverzufluß verwendet wird, zur Sicherstellung konstanter Injektionsparameter für das mit Hilfe des Trägergases transportierte Pulver.

3. Verfahren nach Anspruch 1 oder 2, **dadurch gekennzeichnet, daß** ein stufenlos regelbarer Antriebsmotor für die Dosierplatte (1) vorgesehen ist, der in Abhängigkeit vom Gasdruck (p₃) der Pulverfördereinheit (2) derart geregelt wird, daß die Pulverfördermenge im Bereich der Pulverabfuhrstelle (7, 12) annähernd konstant ist.

4. Verfahren nach einem der vorhergehenden Ansprüche, **dadurch gekennzeichnet, daß** die Einbringung des Pulvers von der Dosierplatte (1) in das Trägergas im Bereich der Pulverabführeinheit (7, 12) derart erfolgt, daß dieses über den Rand der Dosierplatte mittels einer Führungsbahn an einer Abstreifplatte (4) über den Rand der Dosierplatte (1) abgestreift und in einen trichterförmigen Trägergasauslaß (12) geführt wird.

5. Verfahren nach einem der vorhergehenden Ansprüche, **dadurch gekennzeichnet, daß** der Gaseinlaß in den Pulverfördereinheit (2) derart ausgelegt ist, daß das Gas über eine oder mehrere in der Abstreiferplatte (4) eingebrachte Aussparungen zwischen der Dosierplatte (1) und der planparallel aufgelegten Abstreiferplatte (4) derart einströmen kann, daß auf der Dosierplatte verbleibende Pulverpartikel entfernbar sind.

6. Verfahren nach einem der vorhergehenden Ansprüche, . **dadurch gekennzeichnet, daß** die Zufuhr des Pulvers zu einer Pulververarbeitungseinheit durch die Dosierstation mittels einer Regeleinrichtung gesteuert wird, wobei der Trägergasdruck (p₃) als Regelgröße dient.

7. Vorrichtung zur Durchführung des Verfahrens nach einem der Ansprüche 1 - 6, mit einem Pulvervorratsbehälter (5) und einer Dosierstation für eine dosierte Ablage des Pulvers auf eine rotierende Pulver-Dosierplatte (1) in einem Gehäuse (2) einer Pulverfördereinheit, wobei eine kontinuierliche Übergabe des Pulvers zu einer Pulverabführeinheit (7, 12) mit Hilfe eines Trägers erfolgt, **dadurch gekennzeichnet, daß** ein stufenlos regelbarer Antriebsmotor für die Dosierplatte (1) vorgesehen ist, dessen Drehgeschwindigkeit (v) in Abhängigkeit vom Gasdruck (p₃) innerhalb des Gehäuses (2) geregelt ist.

8. Vorrichtung nach Anspruch 7, **dadurch gekennzeichnet, daß** eine Ablagehilfe des Pulvers auf der rotierenden Dosierplatte (1) und eine Entnahmehilfe des Pulvers von der Dosierplatte (1) vorgesehen sind, die aus einem Stück gefertigt sind und planparallel auf der Dosierplatte (1) aufliegen.

9. Vorrichtung nach einem der vorhergehenden Ansprüche 7 oder 8, **dadurch gekennzeichnet, daß** die im Bereich der Pulverabführeinheit (7, 12) die Dosierplatte (1) eine Führungsbahn an einer Abstreifplatte (4) umfaßt.

10. Vorrichtung nach Anspruch 9, **dadurch gekennzeichnet, daß** für den Gaseinlaß in die Pulverfördereinheit (2) eine oder mehrere in die Abstreiferplatte (4) eingebrachte Aussparungen zwischen der Dosierplatte (1) und der planparallel aufgelegten Abstreiferplatte (4) vorgesehen sind.

11. Vorrichtung nach einem der vorhergehenden Ansprüche 7-10, **dadurch gekennzeichnet, daß** eine Regeleinrichtung vorgesehen ist, die mit Hilfe des Trägergasdrucks (p₃) als Regelgröße die Zufuhr des Pulvers durch die Dosierstation steuert.

## Claims

1. Process for adjusting the metered supply of powder to a powder processing unit, in particular a thermal injection flame, with a powder supply container (5) and a metering station for metered depositing of the powder onto a rotating powder metering plate (1) in a housing (2) of a powder conveying unit, the powder being continuously transferred to a powder discharge unit (7, 12) with the aid of a carrier gas, **characterised in that** a varying quantity of powder on the metering plate (1) is conveyed inside the housing (2) by means of a carrier gas and the gas pressure (p₃) inside the housing (2) is detected as a controlled variable and **in that** the speed (v) of the metering plate (1) with which the metered powder is conveyed by means of the metering plate (1) to the powder discharge unit (7, 12) is adjusted in such a way that the carrier gas pressure (p₃) is virtually constant in the powder conveying unit (2).

2. Method according to claim 1, **characterised in that** the gas pressure (p₃) in the powder conveying container (2) which is constituted by the quantity of gas flowing into the container (2) and the quantity of gas flowing to the powder consumer to convey the power, is measured with reference to the counter pressure (p₄) prevailing at the powder injection point in the thermal flame and is used as the controlled variable for the volume constant powder inflow, to ensure constant injection parameters for the powder conveyed with the aid of the carrier gas.

3. Method according to claim 1 or 2, **characterised in that** a continuously adjustable drive motor is provided for the metering plate (1) which is adjusted as a function of the gas pressure (p₃) of the powder conveying unit (2) in such a way that the quantity of powder conveyed is virtually constant in the region of the powder discharge point (7, 12).

4. Method according to any one of the preceding claims, **characterised in that** the powder is brought from the metering plate (1) into the carrier gas in the region of the powder discharge unit (7, 12) in such a way that by means of a guideway to an ejection plate (4), it is ejected over the edge of the metering plate (1) and is guided into a funnel-shaped carrier gas outlet (12).

5. Method according to any one of the preceding claims, **characterised in that** the gas inlet into the powder conveying unit (2) is designed in such a way that the gas can flow in between the metering plate (1) and the ejector plate (4) placed plane-parallel via one or more recesses introduced into the ejector plate (4) in such a way that powder particles remaining on the metering plate can be removed.

6. Method according to any one of the preceding claims, **characterised in that** the supply of powder to a powder processing unit is controlled by the metering station by means of a control device, the carrier gas pressure (p₃) serving as controlled variable.

7. Device for carrying out the method according to any one of claims 1 to 6, with a powder supply container (5) and a metering station for metered depositing of the powder onto a rotating powder metering plate (1) in a housing (2) of a powder conveying unit, the powder being continuously conveyed to a powder discharge unit (7, 12) with the aid of a carrier, **characterised in that** a continuously adjustable drive motor is provided for the metering plate (1), the speed of rotation (v) of which being adjusted as function of the gas pressure (p₃) inside the housing (2).

8. Device according to claim 7, **characterised in that** an aid for depositing the powder on the rotating metering plate (1) and an aid for removing the powder from the metering plate (1) are provided which are produced from one piece and rest plane-parallel on the metering plate (1).

9. Device according to any one of the preceding claims 7 or 8, **characterised in that** in the region of the powder discharge unit (7, 12) the metering plate (1) comprises a guideway to an ejector plate (4).

10. Device according to claim 9, **characterised in that** one or more recesses introduced into the ejector plate (4) for the gas inlet into the powder conveying unit (2) are provided between the metering plate (1) and the ejector plate (4) placed plane-parallel.

11. Device according to any one of the preceding claims 7 to 10, **characterised in that** a control device is provided which with the aid of the carrier gas pressure (p₃) controls the supply of powder through the metering station as a controlled variable.

## Revendications

1. Procédé pour régler l'amenée dosée de poudre à une unité de traitement de poudre, en particulier une flamme d'injection thermique, comportant un réservoir de poudre (5) et un poste de dosage pour un dépôt dosé de la poudre sur une plaque de dosage de poudre rotative (1) dans un boîtier (2) d'une unité de transport de poudre, un transfert continu de la poudre à une unité d'évacuation de poudre (7, 12) étant effectué à l'aide d'un gaz porteur,
**caractérisé en ce qu'**une quantité de poudre produite de façon variable sur la plaque de dosage (1) est transportée au moyen d'un gaz porteur à l'intérieur du boîtier (2) et la pression de gaz (p₃) est détectée à l'intérieur du boîtier (2) comme grandeur de réglage, et **en ce que** la vitesse (v) de la plaque de dosage (1), à laquelle la poudre dosée est transportée au moyen de la plaque de dosage (1) vers l'unité d'évacuation de poudre (7, 12), est réglée de sorte que la pression de gaz porteur (p₃) est approximativement constante dans l'unité de transport de poudre (2).

2. Procédé selon la revendication 1,
**caractérisé en ce que** la pression de gaz (p₃) dans le conteneur de transport de poudre (2) qui est créée à partir de la quantité de gaz entrant dans le conteneur (2) et de la quantité de gaz sortant pour le transport de poudre vers le consommateur de poudre, est mesurée en référence à la contre-pression (p₄) régnant au point d'injection de poudre dans la flamme thermique et est utilisée comme grandeur de réglage pour l'amenée de poudre à volume constant, pour garantir un paramètre d'injection constant pour la poudre transportée à l'aide du gaz porteur.

3. Procédé selon la revendication 1 ou 2,
**caractérisé en ce qu'**un moteur d'entraînement réglable en continu pour la plaque de dosage (1) est prévu, qui est réglé de façon dépendant de la pression de gaz (p₃) de l'unité de transport de poudre (2), de sorte que la quantité transportée de poudre dans la zone de l'emplacement d'évacuation de la poudre (7, 12) est pratiquement constante.

4. Procédé selon une des revendications précédentes,
**caractérisé en ce que** l'introduction de la poudre de la plaque de dosage (1) dans le gaz porteur dans la zone de l'unité d'évacuation de poudre (7, 12) est effectuée de sorte que celle-ci est raclée sur le bord de la plaque de dosage au moyen d'une voie de guidage sur une plaque de raclage (4) sur le bord de la plaque de dosage (1) et est guidée dans une sortie de gaz porteur (12) en forme d'entonnoir.

5. Procédé selon une des revendications précédentes,
**caractérisé en ce que** l'entrée de gaz dans l'unité de transport de poudre (2) est dimensionnée de sorte que le gaz peut entrer, par l'intermédiaire d'un ou plusieurs évidements prévus dans la plaque de raclage (4) entre la plaque de dosage (1) et la plaque de raclage (4) disposée de façon plane et parallèle, de sorte que des particules de poudre demeurant sur la plaque de dosage peuvent être éliminées.

6. Procédé selon une des revendications précédentes,
**caractérisé en ce que** l'amenée de la poudre à une unité de traitement de poudre est commandée par le poste de dosage au moyen d'un dispositif de réglage, la pression du gaz porteur (p₃) servant de grandeur de réglage.

7. Dispositif pour la mise en oeuvre du procédé selon une des revendications 1 - 6, comportant un réservoir de poudre (5) et un poste de dosage pour un dépôt dosé de la poudre sur une plaque de dosage de poudre rotative (1) dans un boîtier (2) d'une unité de transport de poudre, un transfert continu de la poudre à une unité d'évacuation de poudre (7, 12) étant effectué à l'aide d'un moyen porteur,
**caractérisé en ce qu'**un moteur d'entraînement réglable en continu pour la plaque de dosage (1) est prévu, dont la vitesse de rotation (v) est réglée de façon dépendant de la pression de gaz (p₃) à l'intérieur du boîtier (2).

8. Dispositif selon la revendication 7,
**caractérisé en ce qu'**il est prévu un moyen auxiliaire de dépôt de la poudre sur la plaque de dosage rotative (1) et un moyen auxiliaire d'évacuation de la poudre de la plaque de dosage (1), qui sont réalisés en une pièce et reposent de façon plane et parallèle sur la plaque de dosage (1).

9. Dispositif selon une des revendications précédentes 7 ou 8,
**caractérisé en ce que**, dans la zone de l'unité d'évacuation de poudre (7, 12), la plaque de dosage (1) comporte une voie de guidage sur une plaque de raclage (4).

10. Dispositif selon la revendication 9,
**caractérisé en ce que**, pour l'entrée de gaz dans l'unité de transport de poudre (2), il est prévu un ou plusieurs évidements réalisés dans la plaque de raclage (4) entre la plaque de dosage (1) et la plaque de raclage (4) disposé de façon plane et parallèle.

11. Dispositif selon une des revendications précédentes 7 - 10,
**caractérisé en ce qu'**il est prévu un dispositif de réglage qui, à l'aide de la pression du gaz porteur (p₃), commande, comme grandeur de réglage, l'amenée de la poudre à travers le poste de dosage.
